# EUROPÄISCHE PATENTANMELDUNG

(11) **EP 2 135 729 A2**
(43) Veröffentlichungstag der Anmeldung: **23.12.2009**
(21) Anmeldenummer: 09401011.3
(22) Anmeldetag: 17.06.2009
(51) Int. Cl.: B30B 9/32, B26F 1/24, B02C 19/00

(54) **Vorrichtung und Verfahren zum Recyceln von gefüllten Getränkebehältern.**

(30) Priorität: 17.06.2008 DE 10802891
(71) Anmelder: Deckert Maschinenbau GmbH, 21337 Lüneburg (DE)
(72) Erfinder: Armbrecht-Meyer, Andreas, 21406 Melbeck (DE)
(74) Vertreter: Hansen, Jochen

(57) **Zusammenfassung**

Die Erfindung betrifft eine Vorrichtung für das Recycling von gefüllten Getränkebehältern, mit einem Gehäuse, mindestens zwei innnerhalb des Gehäuses in einer ersten Ebene angeordneten rotierenden Walzen, nämlich einer ersten Walze und einer zweiten Walze, wobei die erste Rotationsachse der ersten Walze parallel zu der zweiten Rotationsachse der zweiten Walze orientiert ist, einem Spalt zwischen der ersten und der zweiten Walze, einem Zuführungsbereich im Gehäuse zur Zuführung von zu recycelnden gefüllten Getränkebehältern, einem Trenn- und/oder Abtransportmittel unterhalb der rotierenden Walzen zum Abführen von durch die rotierenden Walzen gequetschten Getränkebehältern und einer Auffangwanne unterhalb des Trennund/oder Abtransportmittels und weiter ein Verfahren zum Recyceln von gefüllten Getränkebehältern.

## Beschreibung

Die Erfindung betrifft eine Vorrichtung und weiter ein Verfahren zum Recyceln von gefüllten Getränkebehältern.

Derartige gefüllte Getränkebehälter können beispielsweise PET-Flaschen oder Getränkegebinde aus beschichtetem Karton, bekannt unter dem Namen Tetra Pak, sein. Diese Getränkebehälter werden seit mehreren Jahren immer stärker nachgefragt, was dazu führt, dass die Abfüller von Getränken derartige Getränkebehälter herkömmlichen Getränkebehältern, beispielsweise den gläsernen Getränkebehältern vorziehen.

Aus dem Stand der Technik ist aus der DE 88 13 775 U1 eine Vorrichtung zum Entsorgen von Dosen und dergleichen bekannt. Hierbei wird das Volumen der zu recycelnden Dosen vor dem Abtransport reduziert. Insbesondere offenbart die Druckschrift eine Anordnung mit Quetschwalzen, die dem Zerquetschen der Dosen dient. Die Quetschwalzen sind in einem Gehäuse angeordnet, das an der Oberseite eine Eingabevorrichtung für die Dosen aufweist und so eine Bewegung der Dosen von oben nach unten durch die Quetschwalzen hindurch zulässt.

Weiter ist aus der JP 2004-345 853 A die Reduktion des Volumens von Getränkebehältern bekannt, wobei insbesondere zwei rotierende Walzen verwendet werden, die mit entsprechenden Zähnen bzw. Zacken versehen sind. Die Zähne befinden sich auf der Oberfläche der rotierenden Walzen.

Aus der JP 2003-251 215 A ist eine Anordnung zum Zusammenquetschen und Schneiden von Getränkebehältern bekannt, wobei diese dem Verringern des Volumens dient. Anschließend wird die zusammengedrückte Getränkeverpackung geschreddert.

Da es bei Abfüllvorgängen in Abfüllanlagen immer wieder dazu kommt, dass Getränke in falsch etikettierte, gänzlich falsche oder defekte Getränkebehälter eingefüllt werden, stellen diese falsch befüllten Getränkebehälter ein großes Entsorgungsproblem dar. Hierbei ist es durchaus üblich, dass eine ganze Charge an falsch befüllten Getränkebehältern anfällt, die nicht für den Handel freigegeben werden kann. Problematisch ist aber nicht nur die Entsorgung der falsch befüllten Getränkebehälter, sondern auch des flüssigen Inhalts.

Ebenfalls können große Mengen an abgelaufenen Getränken oder anderen Flüssigkeiten, die in Verpackungsbehältern der eingangs genannten Art verpackt wurden und die aus dem Handel zurückkommen, ein Recyclingproblem darstellen. Hierbei muss zwingend eine getrennte Entsorgung von Flüssigkeit und Verpackungsbehälter erfolgen.

Der vorliegenden Erfindung liegt die Aufgabe zugrunde, eine Vorrichtung und ein Verfahren aufzuzeigen, die es ermöglichen, falsch gefüllte Getränkebehälter der eingangs genannten Art fachgerecht zu entsorgen, deren Inhalt bei Bedarf und vorzugsweise bei frisch abgefüllten Getränken, wieder in den Produktionsprozess einzubringen und die entleerten Getränkebehälter auf ein möglichst kleines Volumen zu reduzieren, wobei ein weitereres Verarbeiten gewährleistet bleiben soll.

Gelöst wird diese Aufgabe mit einer Vorrichtung nach Anspruch 1 und einem Verfahren nach Anspruch 9.

Wenn die Vorrichtung für das Recycling von gefüllten Getränkebehältern, mit einem Gehäuse, mindestens zwei innnerhalb des Gehäuses in einer ersten Ebene angeordneten rotierenden Walzen, nämlich einer ersten Walze und einer zweiten Walze, wobei die erste Rotationsachse der ersten Walze parallel zu der zweiten Rotationsachse der zweiten Walze orientiert ist, einem Spalt zwischen der ersten und der zweiten Walze, einem Zuführungsbereich im Gehäuse zur Zuführung von zu recycelnden gefüllten Getränkebehältern, einem Trenn-und/oder Abtransportmittel unterhalb der rotierenden Walzen zum Abführen von durch die rotierenden Walzen gequetschten Getränkebehältern und einer Auffangwanne unterhalb des Trenn- und/oder Abtransportmittels ausgestaltet ist, ist es möglich, gefüllte Getränkebehälter zu entleeren, deren entleerten Inhalt aufzufangen und wieder zu verwenden, gleichzeitig die entleerten Getränkebehälter aufzufangen und diese einem weiteren Recyclingprozess zuzuführen. Weiter ist es möglich, das Volumen der Getränkebehälter stark zu verkleinern, wodurch der Platzbedarf für die aufgefangenen entleerten Getränkebehälter verringert wird. Im übrigen ist hierdurch eine fachgerechte Entsorgung der gefüllten Getränkebehälter erst möglich. Hierzu weist der Spalt zwischen der ersten und der zweiten Walze die Breite eines gequetschten Getränkebehälters auf, wodurch der gequetschte Getränkebehälter zwischen der ersten und der zweiten Walze durch den Spalt hindurchgetrieben werden kann. Gleichzeitig wird hier das Volumen des späteren gequetschten Getränkebehälters entsprechend der Spaltweite minimiert. Je kleiner der Spalt zwischen der ersten und der zweiten Walze ausgeführt ist, desto mehr Leistung müssten entsprechende Motoren besitzen die die Walzen antreiben, da mehr Kraft notwendig ist, um den zu quetschenden gefüllten Getränkebehälter in den Spalt zu zwängen. Weiter ist die erste Rotationsrichtung der ersten Walze entgegengesetzt der zweiten Rotationsrichtung der zweiten Walze und eine Transportrichtung der Getränkebehälter ist derart ausgebildet, dass die Getränkebehälter von dem Zuführungsbereich aus kommend durch den Spalt zwischen der ersten und der zweiten Walze hindurch transportiert werden, was zu einem kontinuierlicher Prozess führt. Hierbei werden von der einen Seite des Walzenpaars gefüllte Getränkebehälter zugeführt, durch die Walzen hindurchtransportiert und dabei gequetscht.

Wenn nunmehr auf der Oberfläche mindestens einer rotierenden Walze punktuelle Erhebungen aufgebracht sind, wird der Einzug der zu recycelnden gefüllten Getränkebehälter in den Spalt zwischen der ersten und der zweiten rotierenden Walze erst möglich. Die Erhebungen unterstützen das Quetschen, das Einziehen und vor allem das Scheren, wobei der Getränkebehälter dabei nicht zerkleinert wird. Weiter sind umlaufende Nuten in der Oberfläche mindestens einer der rotierenden Walzen vorhanden, wobei sich abwechselnd umlaufende Nuten und umlaufende Erhebungen ausbilden, wird ein Eingreifen einer ersten Walze in die zweite Walze möglich. Hierbei ist insbesondere ein Eingreifen der o.g. punktuellen Erhebungen in die umlaufenden Nuten der weiteren Walze sinnvoll, da durch die Anordnung der Spalte weiter reduziert werden kann, was zu einer Volumenverkleinerung der späteren gequetschten Getränkebehälter führt. Die Quetschung der Getränkebehälter lässt sich dadurch variieren, dass eine Walze nur punktuelle Erhebungen aufweist, wobei die andere Walze nur umlaufende Nuten aufweist und die umlaufenden Erhebungen, die sich ausbilden, nicht mit punktuellen Erhebungen versehen sind.

Wenn die punktuellen Erhebungen in Form eines Dorns/Zackens und/oder eines Sechskannt-Schlossschraubenkopfes ausgebildet sind, wird der Einzug der zu recycelnden gefüllten Getränkebehälter weiter verbessert, wodurch die Effizienz gesteigert wird.

Besonders vorteilhaft ist es, bei zu recycelnden PET-Flaschen auf der ersten Walze Dornen bzw. Zacken zu verwenden und auf der zweiten Walze Sechskantschlossschraubenköpfe zu benutzen. Diese Kombination der Erhebungen führt zu einer sauberen Quetschung und zu einem Aufstechen der Getränkebehälterhülle und somit zur kontrollierten Leerung der PET-Flaschen. Bei dem Recyceln von gefüllten Getränkegebinden aus beschichtetem Karton wird vorzugsweise die Ausgestaltung gewählt, dass beide rotierenden Walzen Schlossschraubenköpfe auf der Oberfläche aufweisen, da so die punktellen Erhebungen auf der rotierenden Walze den Tetrapack in den Spalt hineinziehen und eine Quetschung vornehmen, ohne das Gesamtgebilde zu zerreißen. Gleichwohl können Tetrapacks auch mit einer Anordnung wie für die PET-Flaschen beschrieben, gequetscht werden.

Weiter ist eine Ausgestaltung sinnvoll, in der die punktuellen Erhebungen in den umlaufenden Nuten oder/und auf den umlaufenden Erhebungen angeordnet sind, so dass die punktuellen Erhebungen beispielsweise in beiden, umlaufenden Erhebungen als auch Nuten vorhanden sind, und derart ausgestaltet sind, dass diese während der Rotation ineinanderfassen. Durch diese Art der Anordung lässt sich der gequetschte Getränkebehälter noch weiter in seinem Restvolumen einschränken.

Wenn die umlaufenden Erhebungen und/oder die punktuellen Erhebungen mindestens einer ersten Walze in die umlaufenden Nuten und/oder die punktuellen Erhebungen einer zweiten Walze eingreifen, wird ein reißverschlussartiges Zerquetschen ermöglicht. Hierbei kann eine gewisse Welligkeit des späteren gequetschten Getränkebehälters vorbestimmt werden.

Die rotierenden Walzen können gleichartig oder unterschiedlich oder gleichartig und unterschiedlich in Größe, Material und Oberflächenbeschaffenheit ausgebildet sein. Beispielsweise können zwei der Walzen eine gleichartig ausgebildete Oberfläche aufweisen, wobei die dritte eine anders ausgebildete Oberfläche aufweist. Hierbei sind auch Abweichungen von der zylindrischen Form denkbar, da beispielsweise eine mehrkantige Raumform einen weiter verbesserten Einzug der Getränkebehälter ermöglicht.

Die Walzen werden von einem Motor angetrieben, wobei die Kraftübertragung über ein Getriebe mit für die einzelnen rotierenden Walzen gleichen und/oder verschiedenen Über- bzw. Untersetzungen erfolgt und der Motor außerhalb des Gehäuses angeordnet ist. Alternativ lässt sich jede einzelne rotierende Walze mit einem eigenen Motor ausstatten, der über eine Gesamtanordnungssteuerung mit einer entsprechenden Drehzahl gefahren werden kann. Hierbei sind die einzeln ansteuerbaren Motoren eigenständig und unabhängig voneinander.

Um die gefüllten Getränkebehälter effektiv in den Spalt hineinzuziehen und anschließend hindurchzuquetschen, weisen die einzelnen rotierenden Walzen bei gleichem Walzendurchmesser leicht bis stark unterschiedliche Drehzahlen auf. Durch diese unterschiedlichen Drehzahlen der einzelnen rotierenden Walzen wirken auf den zu entleerenden und zu zerquetschenden Getränkebehälter beidseits unterschiedliche Umfangsgeschwindigkeiten, womit Scherkräfte entstehen, die die gefüllten Getränkebehälter scheren und dadurch das Öffnen der Getränkebehälter und das Entleeren unterstützen.

Durch das Scheren werden die Getränkebehälter mit einer Kraft belastet, wobei die Kraft anti-parallel zu parallelen inneren oder äußeren Flächen des Getränkebehälters wirkt. Die Wandungen des Getränkebehälters werden relativ zueinander verschoben. Hierdurch reißen diese auf und können gleichzeitig sehr effizient zwischen die rotierenden Walzen eingezogen werden.

Ebenso wird durch die unterschiedlichen Umfangsgeschwindigkeiten der rotierenden Walzen die Durchleitungsgeschwindigkeit der Getränkebehälter durch die Walzen erhöht.

Wenn unterhalb der rotierenden ersten und zweiten Walze in der ersten Ebene eine Messerschneidwalze in einer zweiten Ebene derart angeordnet ist, dass diese die gequetschten und entleerten Getränkebehälter an- und/oder zerschneidet, lassen sich die gequetschten und entleerten Getränkebehälter an-oder zerschneiden. Hierbei werden die gequetschten Getränkebehälter fast vollständig restentleert, da diese an mehreren Stellen angeschnitten werden. Weiter ist ein komplettes Zerschneiden der Getränkebehälter möglich, um dem weiteren Recyclingprozess kleinere Abschnitte der Getränkebehälter zur Verfügung zu stellen. Durch den Abstand der einzelnen Schneiden zueinander lässt sich die Größe der entstehenden Getränkebehälterabschnitte variieren. Insbesondere sind zu kleine Getränkebehälterabschnitte nicht erwünscht, da diese das spätere Trennen von dem entleerten Inhalt der gefüllten Getränkebehälter und den gequetschten Getränkebehältern erschweren würden.

Dadurch, dass das Trenn- und/oder Abtransportmittel ein Förderband ist, wobei das Förderband derart ausgebildet ist, dass auftretende Restflüssigkeit aus gequetschten und entleerten Getränkebehältern nicht mittransportiert wird und zur Auffangwanne hindurchtreten kann, wird die austretende Restflüssigkeit aus gequetschten und entleerten Getränkebehältern bereits bei der Weiterbeförderung der gequetschten und entleerten Getränkebehälter zur Auffwangwanne weitergeleitet. Hierbei kann aufgrund der Fördergeschwindigkeit und der Förderbandlänge dem Abtropfen des Inhalts ausreichend Zeit gegeben werden. Die gequetschten und entleerten Getränkebehälter werden am Ende entweder in einem bereitgestellten Container gesammelt oder aber direkt weiterverarbeitet. Vor der Weiterförderung direkt nach dem Quetschen bzw. Zerschneiden erfolgt eine Trennung derart, dass Flüssigkeit in die Auffangwanne geleitet wird und die Getränkebehälterreste zum Abtransportmittel bzw. einem Förderband transportiert werden. Diese Trennung kann auf einfachste Weise durch ein Gitter erfolgen, dessen Maschengröße kleiner ist als die beispielsweise zerschnittenen Getränkebehälter. Eine andere Option, auch als Zusatzoption denkbar, ist beispielsweise ein Nylongewebe, welches sehr feinmaschig ist, was weiter zu einer feinen Trennung zwischen Inhalt der entleerten und gequetschten Getränkebehälter und den Resten der entleerten und gequetschten Getränkebehälter führt.

Um die innerhalb der Auffangwanne aufgefangene Flüssigkeit, dem Inhalt der gequetschten und entleerten Getränkebehälter, in die Produktion wieder einzuführen, lässt sich beispielsweise eine Pumpe zum Abpumpen der aufgefangenen Flüssigkeit aus der Auffangwanne in der Recyclingvorrichtung anordnen, so dass die Auffangwanne in regelmäßigen Abständen geleert werden kann. Diese Leerung kann wie oben bereits erwähnt in die Produktionsanlage erfolgen oder aber auch in entsprechende Entsorgungsgebinde erfolgen. Gleichwohl ist auch ein Leeren von Hand der Auffangwanne möglich, wenn diese beispielsweise roll- und fahrbar ausgestaltet ist. Eine weitere Filteranlage ist selbstverständlich nach Abpumpen der Flüssigkeit aus der Auffangwanne möglich, so dass beispielsweise eine Feinfilterung des Inhalts der gequetschten und entleerten Getränkebehälter stattfindet.

Wenn das Verfahren zum Recyceln von gefüllten Getränkebehältern die Schritte, Einführen von gefüllten Getränkebehältern, Einziehen, Scheren, Zerquetschen und Zerdrücken der Getränkebehälter, Trennen von Verpackungsteilen der gequetschten Getränkebehälter, Auffangen des Inhalts der gequetschten und entleerten Getränkebehälter, Abtransportieren und Sammeln der gequetschten und entleerten Getränkebehälter umfasst, wird ein fachgerechtes Entsorgungsverfahren angegeben, das zum einen gefüllte Getränkebehälter entleert, diese quetscht und weiterhin abtransportiert und sammelt, und zum anderen den Inhalt der gequetschten und entleerten Getränkebehälter auffängt. Hierbei kann der aufgefangene Inhalt fachgerecht weiterbehandelt werden oder bei Bedarf in den Produktionsprozess zurücküberführt werden. Die gequetschten und entleerten Getränkebehälter können nach der Sammlung entsprechend weiterverarbeitet werden. Insbesondere wird eine Zerstörung der gefüllten Getränkebehälter derart verhindert, dass keine undefinierten gehäckselten und geschredderten Partikel den Inhalt der gequetschten und entleerten Getränkebehälter verunreinigen. Hierzu rotieren während des Verfahrens zum Einziehen, Scheren, Zerquetschen und Zerdrücken der Getränkebehälter rotierende Walzen mit zueinander unterschiedlicher Drehzahl. Hierdurch können sowohl Scher- als auch Zugkräfte auf die gefüllten Getränkebehälter ausgeübt werden.

Dadurch, dass nach dem Zerdrücken der Getränkebehälter durch die rotierende Walzen die gequetschten und entleerten Getränkebehälter durch eine Messerwalze ange- und/oder zerschnitten werden, werden die gequetschten und geleerten Getränkebehälter, wenn sie zerschnitten werden, in kleinere Abschnitte geteilt, bzw. behalten wenn sie angeschnitten werden ihre Größe. Das Anschneiden dient lediglich der Restentleerung der gequetschten und entleerten Getränkebehälter.

Zur ressourcenschonenden Behandlung des Inhalts der gequetschten und entleerten Getränkebehälter und weiterhin aus Ökonomiegründen werden der Inhalt der gequetschten und entleerten Getränkebehälter wieder in die Produktion eingebracht und die gequetschten und entleerten Getränkebehälter wiederaufbereitet. So fallen keine Entsorgungskosten für den Inhalt der gequetschten und entleerten Getränkebehälter an. Weiter kann der Inhalt der gequetschten und entleerten Getränkebehälter wieder in die Produktion eingebracht werden, wenn der Inhalt filterfähig ist, und so können Kosten für die Neuproduktion vermieden werden.

Wenn der Betrieb, die Rotationsgeschwindigkeit und/oder die Rotationsrichtung der rotierenden Walzen über Sensoren im Zuführungsbereich gesteuert werden, lässt sich über den Zuführungsbereich bereits steuern, welche Walzen wie angesteuert werden, da beispielsweise die Sensoren erkennen können, welche Art von Getränkebehältern zu recyceln ist.

Dadurch, dass vor dem Auffangen des Inhalts der gequetschten und entleerten Getränkebehälter dieser Inhalt gefiltert wird, werden kleinste Partikel herausgefiltert, wodurch der Inhalt der gequetschten und entleerten Getränkebehälter ohne Einschränkungen zurück in die Produktion gelangen kann.

Nachfolgend wird ein Ausführungsbeispiel der Erfindung anhand der beiliegenden Zeichnungen detailliert beschrieben.

Darin zeigt:
- Fig. 1: eine räumliche Darstellung der Recyclingvorrichtung,
- Fig. 2: eine Vorderansicht der Recyclingvorrichtung mit teilweiser Darstellung des Innenlebens,
- Fig. 3: eine schematische Darstellung der rotierenden Walzen in der Ebene H1 und deren Rotationsrichtungen,
- Fig. 4: eine räumliche Darstellung einer ersten rotierenden Walze,
- Fig. 5: eine räumliche Darstellung einer zweiten rotierenden Walze und
- Fig. 6: eine räumliche Darstellung auf die geöffnete Recyclingvorrichtung.

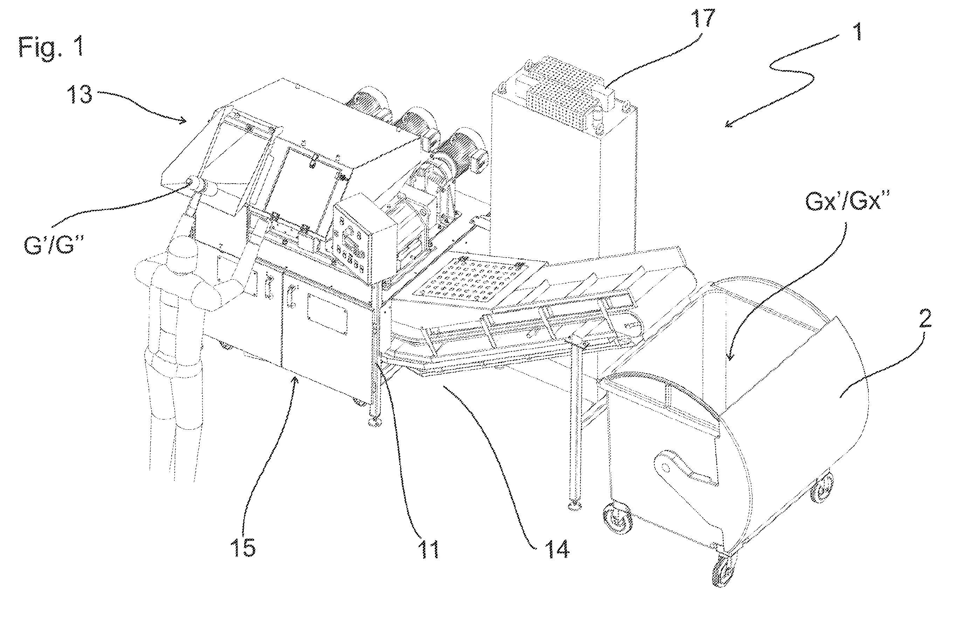

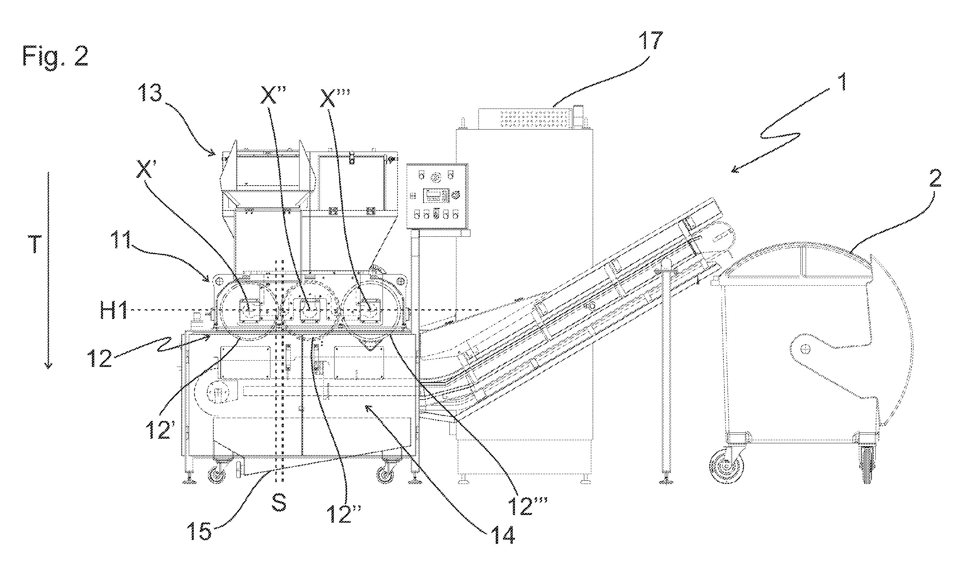

In Fig. 1 ist eine räumliche Darstellung eines Ausführungsbeispiels der Recyclingvorrichtung 1 dargestellt. Die Recyclingvorrichtung 1 besteht aus einem Gehäuse 11, in dem rotierende Walzen 12 (siehe hierzu Fig. 2 bis 6) angeordnet sind, einem Zuführungsbereich 13, einem Trenn- und/oder Abtransportmittel 14, einer Auffangwanne 15 und einer Steuereinrichtung 17.

Die Recyclingvorrichung 1 wird mit gefüllten Getränkebehälter G', G" beladen, die in den Zuführungsbereich 13 eingeführt werden. Beispielsweise weist der Zuführungsbereich 13 Öffnungen mit zwei separat zu öffnenden Klappen auf, wobei zur gleichen Zeit nur jeweils eine Klappe geöffnet werden kann. Wie in diesem Ausführungsbeispiel dargestellt, öffnet eine Person die linke Klappe des Zuführungsbereichs 13 und führt in den Zuführungsbereich 13 einen gefüllten Getränkebehälter G', G" ein, wobei dieser in diesem Beispiel eine PET-Flasche G' ist. Alternativ hätte die Personen ein Getränkegebinde aus beschichtetem Karton G" in die rechte oder die linke Öffnung des Zuführungsbereichs 13 einführen können.

Nach der Zuführung des gefüllten Getränkebehälters G', G" wird dieser innerhalb der Recyclingvorrichung 1 prozessiert, insbesondere wird der Inhalt L von dem Getränkebehälter getrennt, so dass aus dem gefüllten Getränkebehälter G', G" ein gequetschter Getränkebehälter Gx', Gx" und sein Inhalt L werden.

Nach diesem Trennungsprozess, der innerhalb des Gehäuses 11 der Recyclingvorrichung 1 stattfindet, wird der gequetschte Getränkebehälter Gx', Gx" mittels des Trenn- und/oder Abtransportmittels 14, was in diesem Beispiel ein Förderband ist, zu einer Sammelstelle, die in diesem Fall ein Container 2 ist, transportiert. In diesem Container 2 landen dann die gequetschten Getränkebehälter Gx', Gx". Der Inhalt L der gequetschten Getränkebehälter Gx', Gx" wird in der Auffangwanne 15, die sich unterhalb des Gehäuses 11 der Recyclingvorrichung 1 befindet, aufgefangen. Der gesammelte Inhalt L kann bei Bedarf in den Produktionsprozess wieder eingebracht werden.

Figur 2 stellt eine Vorderansicht der Recyclingvorrichtung mit teilweiser Darstellung des Innenlebens dar. Hierbei wird insbesondere die Anordnung der rotierenden Walzen 12, nämlich erste rotierende Walze 12', zweite rotierende Walze 12" und dritte rotierende Walze 12"', dargestellt.

Die rotierenden Walzen 12 bestehen aus einem Walzenkörper, der zylindrisch ausgestaltet ist und sich um eine Rotationsachse dreht. Die erste, zweite, bzw. dritte Rotationsachse X', X" bzw. X"' der rotierenden Walzen 12 sind parallel zueinander ausgerichtet. Weiter befinden sich an einem Ende der rotierenden Walzen 12 Elektromotoren, die die rotierenden Walzen antreiben (siehe Fig. 1).

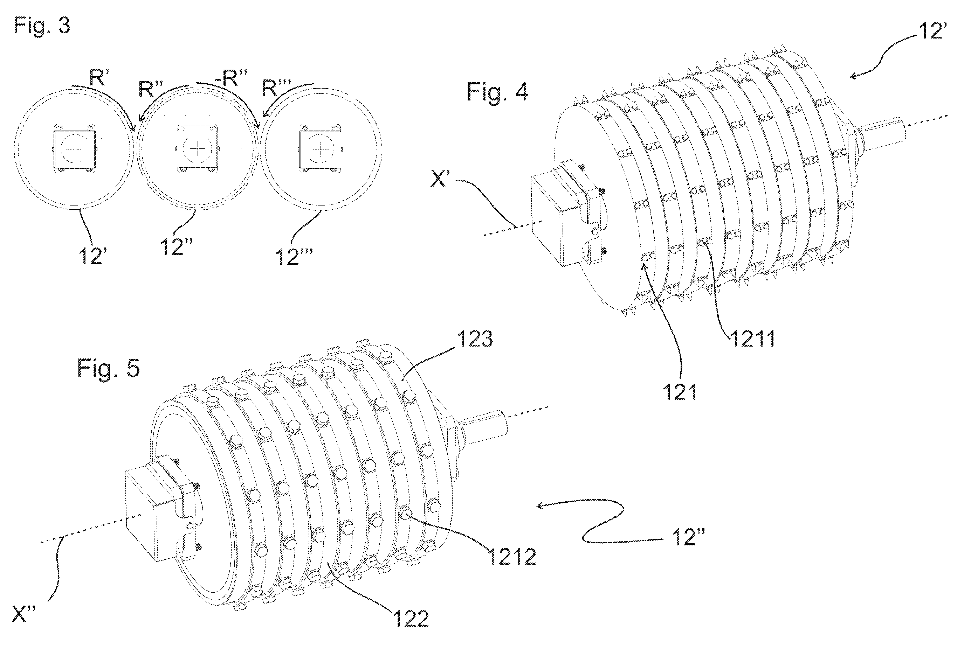

Die drei genannten rotierenden Walzen 12', 12", 12"' sind in einer horizontalen Ebene H1 angeordnet. Zwischen der ersten 12' und der zweiten rotierenden Walze 12" bildet sich ein Spalt S derart aus, dass gequetschte Getränkebehälter dort hindurchpassen. Dies bedeutet, dass die Breite des Spalts S mindestens der doppelten Wandstärke eines Getränkebehälters G', G" entspricht. Bei diesem Spalt S handelt es sich um den tatsächlichen Abstand zwischen Gesamtaußenmaß der ersten rotierenden Walze 12' und dem Gesamtaußenmaß der zweiten rotierenden Walze 12" (mehrere Details zu den Erhebungen siehe Fig. 4 und 5). Es existiert ein zweiter Spalt zwischen der zweiten rotierenden Walze 12" und der dritten rotierenden Walze 12"', auf den hier nicht weiter eingegangen wird, da für diesen die gleichen Bedingungen gelten wie für den Spalt S zwischen der ersten rotierenden Walze 12' und der zweiten rotierenden Walze 12".

Die rotierenden Walzen 12 sind in etwa gleich groß dimensioniert und bilden operative Paare: Beim Öffnen der in Fig. 1 bereits erläuterten linken Öffnung des Zuführungsbereichs 13 wird das Walzenpaar 12' und 12" aktiviert und beim Schließen deaktiviert. Beim Öffnen der aus Fig. 1 bekannten rechten Öffnung des Zuführungsbereichs 13 wird das Walzenpaar 12" und 12"' aktiviert, wobei sich in diesem Fall die Walze 12" in die entgegengesetzte Richtung wie im vorherigen Fall dreht (siehe Fig. 3). Durch diese Ausgestaltung wird es möglich mittels drei Walzen zwei unterschiedliche Getränkebehälter zu recyceln.

Insbesondere ist hier die linke Klappe für gefüllte PET-Flaschen G' und die rechte Klappe für gefüllten Getränkegebinde aus beschichtetem Karton G" vorgesehen.

Die zugeführten zu recycelnden gefüllten Getränkebehälter G', G" werden in diesem Beispiel über den Zuführungsbereich 13 der Recyclingvorrichtung 1 eingeführt und bewegen sich entlang der Transportrichtung T durch die rotierenden Walzen 12' und 12" in Richtung der Auffangwanne. Hierbei passieren sie den Spalt S. Unterhalb der rotierenden Walzen 12 befindet sich ein Trenn- und/oder Abtransportmittel 14, was dazu dient, den Inhalt L der Getränkebehälter von den gequetschten Getränkebehältern Gx', Gx" zu trennen, was beispielsweise durch ein Sieb oder eine Netzstruktur erfolgt. Nach dem Trennen des Inhalts L von den gequetschten Getränkebehältern Gx', Gx" wird der Inhalt L in der unterhalb der Trenn- und/oder Abtransportmittels 14 befindlichen Auffangwanne 15 aufgenommen und gesammelt. Die Reste der gequetschten Getränkebehälter Gx', Gx" werden mittels des Trenn- und/oder Abtransportmittels 14, das in diesem Beispiel als Förderband ausgestaltet ist, aus dem Gehäuse 11 heraustransportiert und zu dem Container 2 geführt, wo sie gesammelt werden und zur weiteren Verwendung bzw. Bearbeitung zwischengelagert werden.

In Fig. 3 ist eine schematische Darstellung der rotierenden Walzen 12', 12" und 12"' mit ihren Rotationsrichtungen in einer Ansicht senkrecht zur Ebene H1 dargestellt.

Die Pfeile mit dem Bezugszeichen R', R", -R", R"' stellen die jeweilige Rotationsrichtung der rotierenden Walzen 12 dar. Für den ersten Fall drehen sich nur die Walzen 12' und 12" und die dritte Walze 12"' ruht. Somit weist die erste rotierende Walze 12' eine erste Rotationsrichtung R' im Uhrzeigersinn auf. Die zweite rotierende Walze 12" weist eine zweite Rotationsrichtung R" auf, die entgegengesetzt dem Uhrzeigersinn ist. Somit rotieren die beiden Walzen 12' und 12" zueinander. In diesem Fall würde ein gefüllter Getränkebehälter G', G" zwischen die Walzen 12' und 12" eingebracht werden, wodurch dieser durch die Walzen 12' und 12" durch den gebildeten Spalt S (siehe Fig. 2) prozessiert wird.

Bei Umstellung der zu recycelnden gefüllten Getränkebehälter G', G" bleibt das rotierende Walzenpaar aus erster 12' und zweiter rotierender Walze 12" stehen und das zweite rotierende Walzenpaar bestehend aus zweiter 12" und dritter rotierender Walze 12"' setzt sich derart in Rotation, dass die zweite rotierende Walze 12" in Richtung -R", was der entgegengesetzten ursprünglichen Rotationsrichtung R" entspricht und die dritte rotierende Walze 12"' in die Rotationsrichtung R"', was dem entgegengesetzten Uhrzeigersinn entspricht, rotiert. Somit rotieren auch diese beiden Walzen 12" und 12"' des zweiten Walzenpaars zueinander, so dass ein gefüllter Getränkebehälter G', G" von oben zwischen diese beiden rotierenden Walzen 12 eingebracht wird und ebenfalls durch den Spalt prozessiert wird.

Fig. 4 stellt eine räumliche Darstellung einer ersten rotierenden Walze 12' dar. Die erste rotierende Walze 12' dreht sich um die Rotationsachse X'. Die erste rotierende Walze 12' weist zudem eine rotationssymmetrische Zylinderform auf. Auf der Oberfläche des Zylinders der ersten rotierenden Walze 12' befinden sich punktuelle Erhebungen 121. Diese punktuellen Erhebungen 121 sind in diesem Fall als Dorn bzw. Zacke 1211 ausgebildet. Sie sind in diesem Fall zu Paaren von je zwei Dornen/Zacken 1211 zusammen angeordnet, die in paralleler Richtung zur Rotationsachse X' angeordnet sind, wobei der Abstand zwischen den Paaren in etwa gleich dem Platzbedarf des Dorn/Zackenpaares 1211 ist. Der Abstand zwischen zwei benachbarten Dorn/Zackenpaaren 1211 bietet ausreichend Platz um eine punktuelle, als auch eine umlaufende Erhebung einer zweiten rotierenden Walze 12" (siehe Fig. 5) aufzunehmen.

Fig. 5 stellt eine räumliche Darstellung einer zweiten rotierenden Walze 12" dar. Die zweite rotierende Walze 12" rotiert ähnlich wie die erste rotierende Walze 12' um eine zweite Rotationsachse X". Auch diese rotierende Walze 12" weist eine Zylinderform auf. Die zweite rotierende Walze 12" weist auf der Außenseite umlaufende Erhebungen 123 auf, die zusätzlich mit Sechskant-Schlossschraubenköpfen 1212 versehen sind. Weiterhin sind umlaufende Nuten 122 erkennbar, die fast die gleiche Breite wie die umlaufenden Erhebungen 123 haben. Die umlaufenden Nuten 122 wechseln sich mit den umlaufenden Erhebungen 123 regelmäßig ab. Begonnen wird jeweils mit einer umlaufenden Nut 122 an den Außenseiten der zweiten rotierenden Walze 12".

In Kombination mit der aus Fig. 4 ersten rotierenden Walze 12' passen die umlaufenden Nuten 122 der zweiten rotierenden Walze 12" zu den entsprechenden punktuellen Erhebungen 121 (Fig. 4) der ersten rotierenden Walze 12', so dass ein reißverschlussartiges Ineinandergreifen möglich ist. Insbesondere dient das versetzt angeordnete Anbringen von Nuten und Erhebungen zwischen zwei rotierenden Walzen dem verbesserten Transport des Getränkebehälters innerhalb des Spalts S (Fig. 2) in Transportrichtung T.

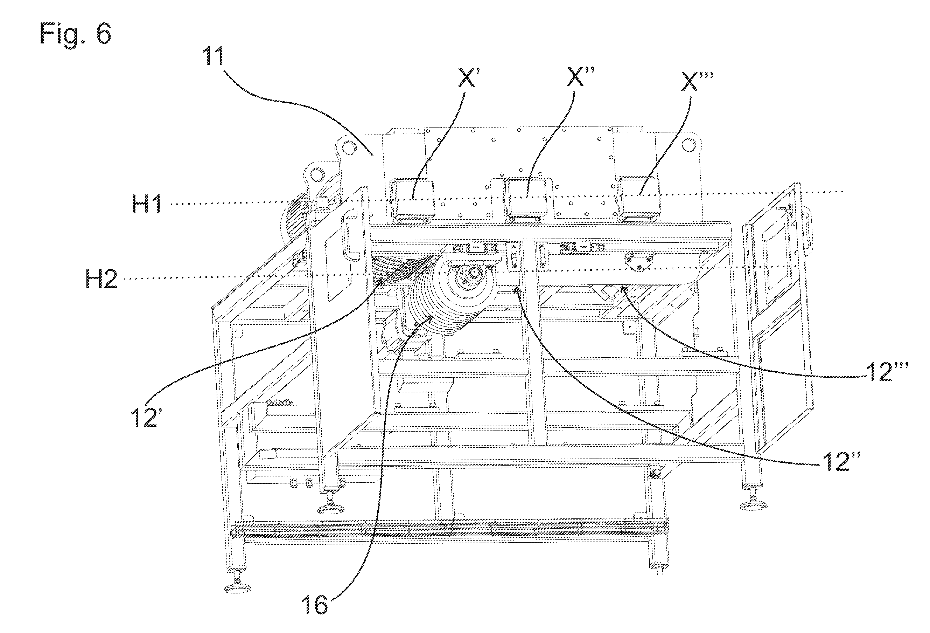

Fig. 6 stellt eine räumliche Darstellung auf die geöffnete Recyclingvorrichtung 1 dar. Hierbei sind die Rotationsachsen X', X", X"' dargestellt, die sich alle in der ersten Ebene H1 befinden und parallel zueinander angeordnet sind. Neu gegenüber dem bisher erwähnten Details der in diesem Ausführungsbeispiel dargestellten Recyclingvorrichtung 1 ist eine Messerschneidwalze 16. Diese Messerschneidwalze 16 ist in einer zweiten Ebene H2 angeordnet. Die zweite Ebene H2 ist parallel zu ersten Ebene H1 angeordnet. Die Rotationsachse der Messerschneidwalze 16 ist auch parallel zu den Rotationsachsen X', X" und X"' angeordnet. Die Messerschneidwalze 16 befindet sich unterhalb des rotierenden Walzenpaars, bestehend aus erster rotierender Walze 12' und zweiter rotierender Walze 12". Diese Messerschneidwalze 16 hat einen geringeren Außendurchmesser als die rotierenden Walzen 12 und hat auf deren Außenseite radial nach Außen zeigende, messerartige, dünnwandige Schneidklingen angeordnet.

Die Messerschneidwalze 16 wird ebenfalls durch einen Elektromotor angetrieben, so dass eine Rotation der Messerschneidwalze bewirkt wird. Die Messerschneidwalze ist in etwa mittig unter dem Spalt S zwischen der ersten rotierenden Walze 12' und der zweiten rotierenden Walze 12" angeordnet, so dass die Messerschneidwalze die durch die erste rotierende Walze 12' und die zweite rotierende Walze 12" gequetschten Getränkebehälter Gx' an- bzw. zerschneiden kann.

### Bezugszeichenliste

- 1: Recyclingvorrichtung
- 11: Gehäuse
- 12, 12', 12", 12"': rotierende Walze (erste, zweite, dritte)
- 121: punktuelle Erhebungen
- 1211: Dorn/Zacke
- 1212: Sechskannt-Schlossschraubenkopf
- 122: umlaufende Nut
- 123: umlaufende Erhebung
- 13: Zuführungsbereich
- 14: Trenn- und/oder Abtransportmittel
- 15: Auffangwanne
- 16: Messerschneidwalze
- 17: Steuereinrichtung
- 2: Container
- G', G": gefüllter Getränkebehälter
- Gx', Gx": gequetschter Getränkebehälter
- H1: erste Ebene
- H2: zweite Ebene
- L: Inhalt
- R', R", R"', -R": Rotationsrichtung (erste, zweite, dritte, entgegengesetzte zweite)
- S: Spaltz
- T: Transportrichtung
- X', X", X"': Rotationsachse (erste, zweite, dritte)

## Patentansprüche

1. Vorrichtung für das Recycling von gefüllten Getränkebehältern (G', G"), mit:
- einem Gehäuse (11),
- mindestens zwei innnerhalb des Gehäuses (11) in einer ersten Ebene (H1) angeordneten rotierenden Walzen (12), nämlich einer ersten Walze (12') und einer zweiten Walze (12"), wobei die erste Rotationsachse (X') der ersten Walze (12') parallel zu der zweiten Rotationsachse (X") der zweiten Walze (12") orientiert ist,
- einem Spalt (S) zwischen der ersten (12') und der zweiten Walze (12"),
- einem Zuführungsbereich (13) im Gehäuse (11) zur Zuführung von zu recycelnden gefüllten Getränkebehältern (G', G"),
- einem Trenn- und/oder Abtransportmittel (14) unterhalb der rotierenden Walzen (12', 12", 12"') zum Abführen von durch die rotierenden Walzen (12) gequetschten Getränkebehältern (Gx', Gx")
- und einer Auffangwanne (15) unterhalb des Trenn- und/oder Abtransportmittels (14),
wobei der Spalt (S) zwischen der ersten (12') und der zweiten Walze (12") mindestens die Breite eines gequetschten Getränkebehälters (Gx', Gx") aufweist und die erste Rotationsrichtung (R') der ersten Walze (12') entgegengesetzt der zweiten Rotationsrichtung (R") der zweiten Walze (12") ist und eine Transportrichtung (T) der Getränkebehälter (G', G") derart ausgebildet ist, dass die Getränkebehälter (G', G") von dem Zuführungsbereich (13) aus kommend durch den Spalt (S) zwischen der ersten (12') und der zweiten Walze (12") hindurch transportiert werden, **dadurch gekennzeichnet, dass** auf der Oberfläche mindestens einer rotierenden Walze (12) punktuelle Erhebungen (121) aufgebracht sind und dass umlaufende Nuten (122) in der Oberfläche mindestens einer der rotierenden Walzen (12) vorhanden sind, wobei sich abwechselnd umlaufende Nuten (122) und umlaufende Erhebungen (123) ausbilden.

2. Vorrichtung nach Anspruch 1, **dadurch gekennzeichnet, dass** die punktuellen Erhebungen (121) als Dorn/Zacken (1211) und/oder als Sechskannt-Schlossschraubenkopfes (1212) ausgebildet sind.

3. Vorrichtung nach Anspruch 1 oder 2, **dadurch gekennzeichnet, dass** die punktuellen Erhebungen (121) in den umlaufenden Nuten (122) oder/und auf den umlaufenden Erhebungen (123) angeordnet sind.

4. Vorrichtung nach Anspruch 1, 2 oder 3, **dadurch gekennzeichnet, dass** die umlaufenden Erhebungen (122) und/oder die punktuellen Erhebungen (123) mindestens einer ersten Walze (12') in die umlaufenden Nuten (121) und/oder die punktuellen Erhebungen (123) einer zweiten Walze (12") eingreifen.

5. Vorrichtung nach einem der vorangehenden Ansprüche, **dadurch gekennzeichnet, dass** die einzelnen rotierenden Walzen (12) unterschiedliche Drehzahlen aufweisen.

6. Vorrichtung nach einem der vorangehenden Ansprüche, **dadurch gekennzeichnet, dass** unterhalb der rotierenden ersten (12') und zweiten (12") Walze in der ersten Ebene (H1) eine Messerschneidwalze (16) in einer zweiten Ebene (H2) derart angeordnet ist, dass diese die gequetschten und entleerten Getränkebehälter (Gx',Gx") an- und/oder zerschneidet.

7. Vorrichtung nach einem der vorangehenden Ansprüche, **dadurch gekennzeichnet, dass** das Trenn- und/oder Abtransportmittel (14) ein Förderband ist, wobei das Förderband derart ausgebildet ist, dass auftretende Restflüssigkeit aus gequetschten und entleerten Getränkebehältern (Gx',Gx") nicht mittransportiert wird und zur Auffangwanne hindurchtreten kann.

8. Vorrichtung nach einem der vorangehenden Ansprüche, **dadurch gekennzeichnet, dass** eine Pumpe zum Abpumpen der aufgefangenen Flüssigkeit aus der Auffangwanne vorhanden ist.

9. Verfahren zum Recyceln von gefüllten Getränkebehältern (G', G") mit den Schritten:
- Einführen von gefüllten Getränkebehältern (G', G");
- Einziehen, Scheren, Zerquetschen und Zerdrücken der Getränkebehälter (G', G");
- Trennen von Verpackungsteilen der gequetschten Getränkebehälter (Gx', Gx");
- Auffangen des Inhalts (L) der gequetschten und entleerten Getränkebehälter (Gx', Gx");
- Abtransportieren und Sammeln der gequetschten und entleerten Getränkebehälter (Gx', Gx"),
wobei zum Einziehen, Scheren, Zerquetschen und Zerdrücken der Getränkebehälter (G', G") rotierende Walzen (12) mit zueinander unterschiedlicher Drehzahl rotieren.

10. Verfahren nach Anspruch 9, **dadurch gekennzeichnet, dass** nach dem Zerdrücken der Getränkebehälter (G', G") durch die rotierenden Walzen (12) die gequetschten und entleerten Getränkebehälter (Gx', Gx") durch eine Messerwalze (16) ange- und/oder zerschnitten werden.

11. Verfahren nach Anspruch 9 oder 10, **dadurch gekennzeichnet, dass** der Inhalt (L) der gequetschten und entleerten Getränkebehälter (Gx', Gx") wieder in die Produktion eingebracht und die gequetschten und entleerten Getränkebehälter (Gx', Gx") wiederaufbereitet werden.

12. Verfahren nach einem der Ansprüche 9 bis 11, **dadurch gekennzeichnet, dass** der Betrieb, die Rotationsgeschwindigkeit und/oder die Rotationsrichtung (R) der rotierenden Walzen (12) über Sensoren im Zuführungsbereich (13) gesteuert werden.

13. Verfahren nach einem der Ansprüche 9 bis 12, **dadurch gekennzeichnet, dass** vor dem Auffangen des Inhalts (L) der gequetschten und entleerten Getränkebehälter (Gx', Gx") dieser Inhalt (L) gefiltert wird.
